Europäisches Patentamt

**European Patent Office**

**Office européen des brevets**

(19)

(11) Publication number: **0 106 689**
**A2**

## (12) EUROPEAN PATENT APPLICATION

(21) Application number: **83306259.9**

(22) Date of filing: **14.10.83**

(51) Int. Cl.³: **B 60 N 1/12**

(30) Priority: **15.10.82 GB 8229597**
**20.01.83 GB 8301500**

(43) Date of publication of application:
**25.04.84 Bulletin 84/17**

(84) Designated Contracting States:
**AT BE CH DE FR GB IT LI LU NL SE**

(71) Applicant: **ASE (UK) LIMITED**
**Norfolk Street**
**Carlisle Cumbria CA2 5HX(GB)**

(72) Inventor: **Anderson, Alexander Barrie**
**7 Lazonby Terrace**
**Carlisle Cumbria(GB)**

(72) Inventor: **Nicod, Frederick Charles**
**Willow Bank**
**Low Row Nr. Brampton Cumbria(GB)**

(74) Representative: **Jones, Ian et al,**
**POLLAK MERCER & TENCH High Holborn House 52-54**
**High Holborn**
**London WC1V 6RY(GB)**

(54) **Child's seat.**

(57) The seat 210 has a one-piece shell 212 pivotally mounted on rivets 219 in a support frame 218. Cross rails 224 of the frame contact the squab and backrest of a vehicle seat when the child's seat is in use. Adjustment of the angular orientation of the shell is achieved by mounting the frame on a vehicle seat in a desired orientation and/or by pivoting of the shell relative to the support frame and locking the shell in a desired orientation by use of locking devices having operating handles 255.

In a modified child's seat (Figures 3 to 6), the shell 112 is fixed relative to the support frame 118. In a further child's seat (Figures 1 and 2), the angular orientation of the shell 12 is adjustable by folding of inner and outer links 20,24 of lower mounting arms into extended or contracted conditions.

FIG. 7.

EP 0 106 689 A2

CHILD'S SEAT

DESCRIPTION

This invention relates to child's seats of the type which can be fitted with a safety harness to carry in a vehicle a baby or child too small to use a normal vehicle seat and its associated safety belt.

Known child's safety seats tend to be rather inconvenient to fit to and remove from a vehicle and have the disadvantage that, in use, the head of a sleepy or sleeping child tends to rock forwards and become unsupported. The present invention aims to lessen or overcome these disadvantages.

The invention provides a child's seat comprising a seat structure and means for mounting the seat structure on a vehicle seat, characterised in that the mounting means is connected to the seat structure at a position or positions between two spaced positions of engagement of the seat structure respectively with the squab and the backrest portions of the vehicle seat with the seat structure at a selected angular orientation relative to the vehicle seat.

The mounting means advantageously has a first portion extending from a vehicle attachment position to a common connection with second and third portions extending from the common connection to respective spaced positions on the seat structure.

In one embodiment, the mounting means comprises a first, a second and a third such portion at each side of the child's seat. The first portions are thus arranged for connection to two vehicle anchorage points only, the anchorage points lying one at each side of the child's seat. The anchorage points may be those normally provided for adult safety belts. The need for special drilling or tapping of the vehicle body is thus avoided, as is the need for anchorage straps which pass over the top of the vehicle seat backrest and intrude into the luggage space of hatchback vehicles and estate cars. The first mounting means portions may comprise lengths of webbing which may include releasable couplings at the common connections for separation of the second and third portions attached to the seat structure from the first portions which can be permanently fitted to the vehicle anchorage points.

The seat structure may comprise a seat body having end portions providing the positions of engagement with the vehicle seat or, alternatively, the seat structure may comprise a seat body and frame means secured thereto, the frame means providing the positions of engagement with the vehicle seat.

The frame means conveniently comprises a generally-rectangular frame having end members providing the positions of engagement with the vehicle seat and side members between which the seat body is secured.

The child's seat will be capable of being mounted on a vehicle seat in a variety of angular positions including a reclined position in which the tendency for the head of a sleepy or sleeping child to rock forwards is much reduced. However, the child's seat is advantageously arranged for selective adjustment of the orientation of its squab and backrest with respect of the vehicle seat after installation on the vehicle seat and securing to the vehicle anchorages. This adjustment may be provided for by pivotal mounting of the seat body relative to the said frame means. The child's seat can thus be moved between an upright and a reclined position.

Alternatively, when the mounting means comprises the said first, second and third portions, at least one of the second and third portions can be extensible in length to alter the angular orientation of the seat structure.

Selective adjustment of the orientation of the child's seat and backrest surfaces is also available in a child's seat which the invention also provides: this child's seat comprises a seat body providing seat and backrest surfaces for an occupant and means for mounting the seat body on a vehicle seat, characterised by frame means for supporting the seat body on the vehicle seat, the seat body being pivotable on the frame means about a transverse axis for selective adjustment of the angular orientation of the seat body seat and backrest surfaces relative to the vehicle seat.

Advantageously, when the seat body is pivotable relative to the frame means, the child's seat has clamping means for clamping the seat body in a selected position relative to the frame means.

Three embodiments of the invention will now be described by way of example with reference to the drawings in which:-

Fig. 1 is a side-view of a first, reclinable child's seat mounted on a motor vehicle seat in a first, generally upright position;

Fig. 2 is a side-view of the seat of Fig. 1 in a second, more reclined position;

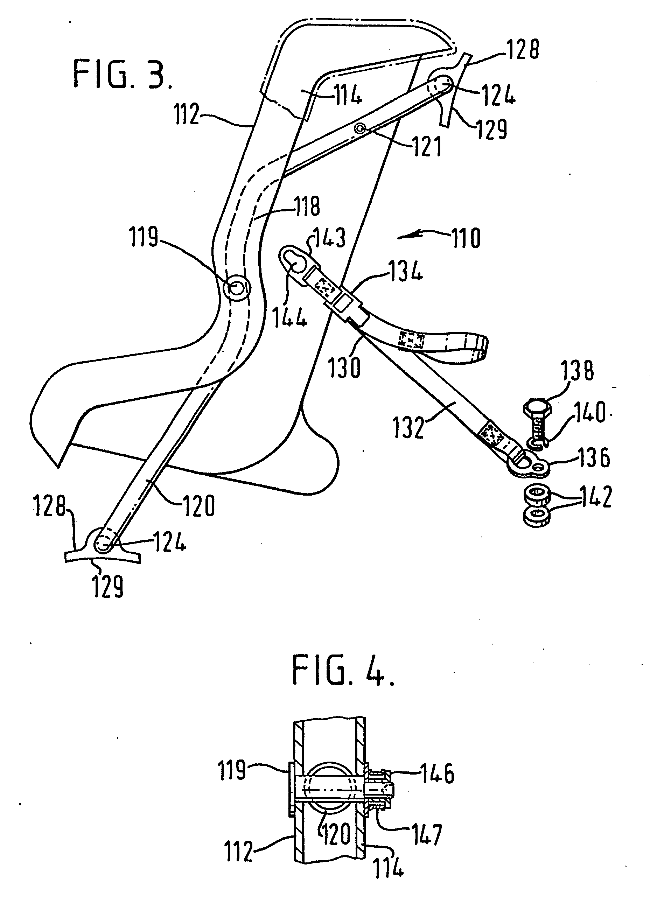

.Fig. 3 is a side view of a second child's seat embodying the invention;

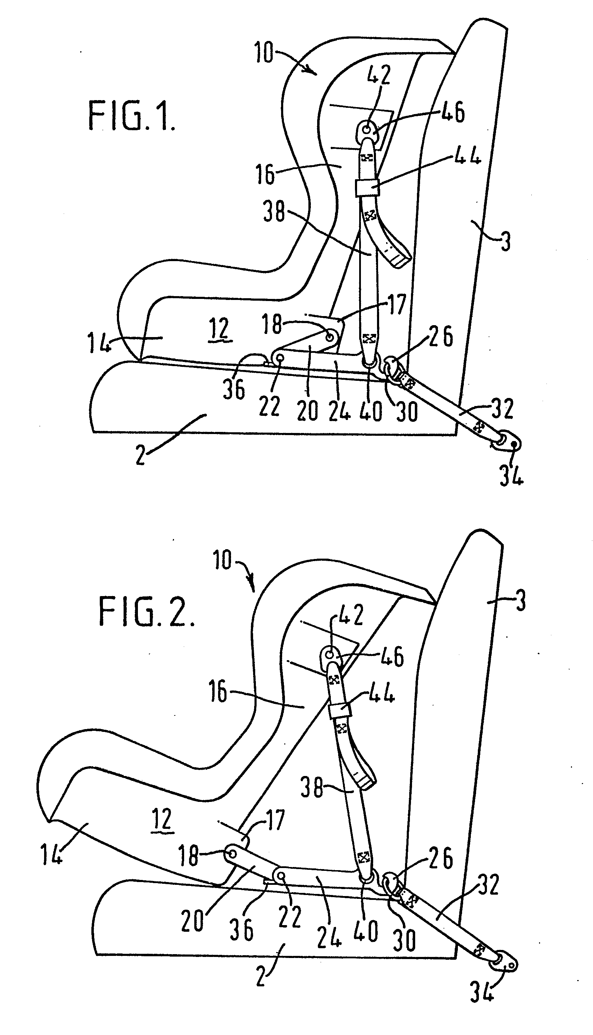

. Fig. 4 is a cross-sectional view of part of the seat of Fig. 2;

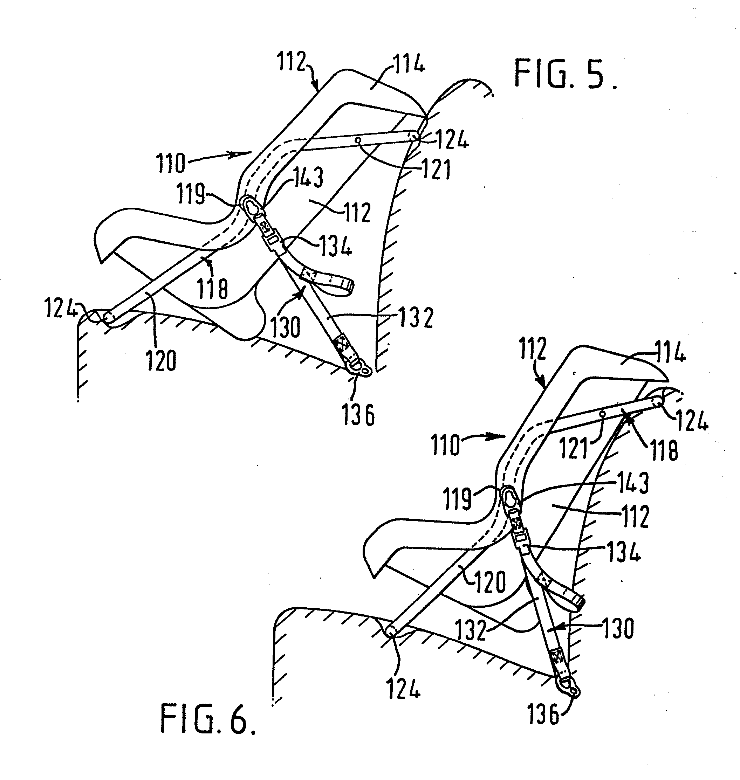

Figs. 5 and 6 show the seat of Fig. 3 in two alternative orientations relative to a vehicle seat;

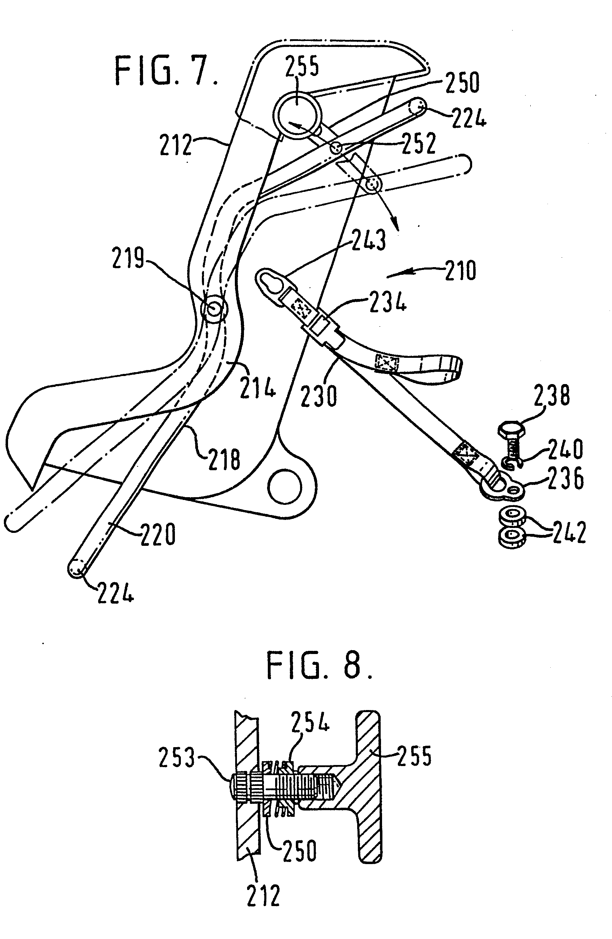

Fig. 7 is a view similar to Fig. 3 of a third seat embodying the invention; and

Fig. 8 is a cross-sectional view of part of the seat of Fig. 7.

Fig. 1 shows a vehicle seat 1 having a squab portion 2 and a backrest 3. Mounted on the vehicle seat 1 is a child's seat 10 having a shell 12 which is upholstered internally to provide a squab portion 14 and a backrest 16. The shell 12 of the child's seat 10 is similar to the shell of the seat described in UK Patent Specification No. 1546772 and is fitted with a conventional safety harness (not shown).

The rear of the shell 12 of the child's seat 10 is formed at each side and adjacent its bottom with mounting projections 17 to which are pivotally attached at 18 inner links 20 of mounting arms of the seat 10. The outer ends of the inner links 20 are pivotally attached at 22 to respective outer links 24 of the mounting arms, the outer links 24 being formed at their outer ends into hooks 26 for receiving eyes 30 secured to the ends of anchoring straps 32. The straps 32 extend to vehicle attachment positions comprising conventional brackets 34 which are secured to the standard safety belt anchorages of the vehicle, or other suitable points on the vehicle's structure, at each side of the seat 1. Each outer link 24 has at its inner end a stop 36 for abutment with the respective inner link 20 to limit the relative angular movement between the inner and outer links 20,24.

A bracing strap 38 having a length-adjustment device 44 extends between an eye 40 adjacent the outer end of each outer mounting link 24 and a mounting 42 on the shell 12 of the child's seat 10 nearer the top of the backrest 14, where it is secured by a conventional bracket 46.

To use the child's seat 10 in its more upright position, the inner and outer mounting links 20,24

- 4a -

are folded to lie to an acute angle to each other,
the hooks 28 secured to the eyes 30 of the
anchoring straps 32, and the length of each bracing strap 38 adjusted by use of the adjustment device 44. The child's seat 10 now rests on the vehicle seat 1 with the underside of its squab portion 14 providing a first engagement position by contacting the squab portion 2 of the vehicle seat 1 and the upper edge of its backrest 16 in firm contact with the backrest 3 of the vehicle seat 1 to provide a second engagement position. In this position, a child sitting in the child's seat 10 is in an upright position and its legs can hang over the front edge of the seating portion 2 of the vehicle seat 1.

Figure 2 of the drawing shows the child's seat 10 in its second, more reclined position. To attain this position the adjustment devices 44 on the bracing straps 38 are slackened so that the inner and outer mounting links 20,24 can be pivoted into a position in which they lie at an obtuse angle to each other and the stops 36 on the outer mounting links 24 are in abutment with the inner mounting links 20. The length of each bracing strap 38 is now adjusted using the adjustment devices 44 to bring the upper edge of the backrest 16 of the child's seat 10 into firm contact with the backrest 3 of the vehicle seat 1. The child's seat 10 is now in its second, more reclined position in which the head and body of a sleepy or sleeping child is supported by the backrest 16 of the seat 10 and the tendency for the child's seat body and head to rock forwards is substantially overcome.

In a modified child's seat (not shown) embodying the present invention, the links 20, 24 are replaced by arms of non-adjustable effective length. The length of the arms can be chosen so that the child's seat is positioned on the vehicle seat in a reclined or upright position, as desired.

It has been found for both the embodiments of the invention described that the combination of the lower mounting arms and extensible strap 38 are particularly effective in securely mounting the child's seat 10 on the vehicle seat 1. This secure mounting can be obtained in each case without the need to provide anchorage points on the vehicle additional to the standard safety belt anchorages and without the need for straps to pass over the backrest 3 of the vehicle seat 1. Inconvenient drilling and tapping of the body of the vehicle is thus avoided. It should also be noted that the straps 32 require no length adjustment once fitted to a particular vehicle and thus inconveniently inaccessible adjustment devices are avoided. The straps 32 may extend around the sides or the vehicle seat 1, as shown in Figures 1 and 2, or, alternatively, between the squab and backrest portions of a wider vehicle seat such as the type of rear seat common in a motor car.

Fig. 3 shows a child's seat 110 having an internally upholstered shell 112 which is rigidly attached to a frame means comprising a support frame 118 by a first rivet 119 extending through a lip 114 around the seat shell 112 (see Fig. 4) and by a second rivet 121 extending through the side of the shell 112. The support frame 118 is generally rectangular in plan and has side rails 120 constituting support arms for cross rails 124. The cross rails 124 carry feet 128 which have engagement surfaces 129 of relatively large area and are rotatable on the cross rails 124 into orientations in which the engagement surfaces 129 contact the surfaces of the squab and backrest of a vehicle seat and help to prevent damage to the upholstery of the vehicle seat. The cross rails 124 and engagement surfaces constitute spaced engagement positions of the child's seat 110. The frame means need not be formed by a generally-rectangular support frame 118. Alternatively, the frame 118 is replaced by two generally L-shaped members. One limb of each L-member provides the cross member which contacts the vehicle seat and the other limbs of the L-members extend to opposite sides of the shell to which they are attached by rivets in the positions occupied by the rivets 119 in the second embodiment.

The child's seat 110 is held in place in the vehicle by a restraint 130 at each side of the seat. Each restraint 130 comprises webbing 132 having a device 134 for adjusting its length and tension. Each length of webbing 132 extends to a vehicle attachment position comprising a bracket 136 for attachment to a seat belt anchorage or other suitable point on a vehicle structure. The bracket 136 is secured by a bolt 138 fitted with a washer 140 and spacers 142. The other end of each length of webbing 132 is formed into a loop carrying a bracket 143 having a keyhole aperture 144 which receives a steel collar 146 having a bush 147 of plastics material fitted to the outer end of the respective first rivet 119 (see Fig. 4).

In use the child's seat 110 is placed on a vehicle seat with the feet 128 positioned on the cross rails 124 so that the engagement surfaces 129, and in some cases also the cross rails 124, are in contact with the backrest and squab of the vehicle seat and provide spaced engagement positions. The angular orientation of the child's seat 110 with respect of the vehicle seat may be selected as desired, within limits determined by the relative orientation of the backrest and squab of the vehicle seat. To secure the child's seat 110, the restraints 130, which will usually be already secured to the vehicle seat belt anchorage points by the bolts 138, are attached to the first rivets 119 by fitting the keyhole apertures 144 over the collars 146 and are then tensioned by means of the adjustment devices 134. The child's seat 110 is now held with the engagement surfaces 129 of its feet 128 and its cross rails 124 in firm contact with the upholstery of the vehicle seat and in a desired angular orientation.

Figs. 5 and 6 show a form of the seat 110 of Figs. 3 and 4 modified by the omission of the feet 128, installed on a vehicle seat in a reclined and in a more upright position respectively, the different orientations being obtained by appropriate positioning of the seat 110 prior to tightening of the restraints 130. In Fig. 6 the shell 112 is not in contact with the vehicle seat squab.

Fig. 7 shows a child's seat 210 which is a modified version of the seat 110 shown in Fig. 3. Accordingly, the features of the seat 210 corresponding to the seat 110 will not be described in detail and are designated in Fig. 7 by reference numerals greater than the corresponding reference numerals of Fig. 3 by 100. The seat 210 may also be fitted with feet identical to those of the seat 110.

The child's seat 210 is modified to allow its shell 212 to be selectively pivoted with respect to its support frame 218. This adjustment is obtained by pivotal mounting on the shell 212 on the first rivets 219. The amount of angular movement of the shell 212 relative to the frame 218 about the axis of the rivets 219 is limited and controlled by a link 250 having one end pivotally connected to an upper portion of one side rail 220 of the support frame 218 by a rivet 252. Preferably there are links 250 at each side of the shell 218. The or each link 250 is slidably connected to the shell 212 by a stud 253 moulded with the shell and extending through a slot in the link. Each stud 253 has a springloaded locking device 254 (Fig. 8) which includes an operating handle 255. Operation of the or each locking device 254 frees the or each sliding link 250 for sliding movement on its stud 253 to adjust the angular position of the shell 212 in the support frame 218.

The seat 210 of Figs. 7 and 8 is installed in a vehicle in a manner exactly similar to that in which the seat 110 of Fig. 3 is installed. After installation, the angular orientation of the shell 212 relative to its vehicle seat can be adjusted by adjustment of the shell 212 in the frame 218.

It will be noted that the use of straps passing over the vehicle seat back is also avoided in the second and third embodiments. Again, the restraints 130 may pass around the sides of a vehicle seat or between the squab and backrest of the vehicle seat.

By way of further modification, the seat of Figs. 7 and 8 may be arranged for pivoting of the shell 212 relative to the frame 218 about an axis located in the region of the rivets 252. In this modification, slidable links extend between the shell and the frame either in the region occupied by the first rivets 219 of the seat of Figs. 7 and 8, or closer to the lower ends of the side rails 220. The slidable links are lockable by locking devices similar to the devices 254 of the seat of Figs. 7 and 8. This modified seat has the advantage that, during relative movement of the shell and frame, the head of a child occupying the seat is kept substantially still because the axis of pivotation of the shell and frame passes through or close to the child's head. This feature is of advantage should relative pivotal movement of the shell and frame occur in an accident involving a vehicle in which the seat is mounted.

It will be noted that a further advantage of the seats described hereinbefore is that the shell portion of the seat can be easily detached from the mounting means and the seat removed from a vehicle whilst a sleepy or sleeping child remains in the seat.

CLAIMS

1.    A child's seat comprising a seat structure and means for mounting the seat structure on a vehicle seat, characterised in that the mounting means is connected to the seat structure at a position or positions between two spaced positions of engagement of the seat structure respectively with the squab and the backrest portions of the vehicle seat with the seat structure at a selected angular orientation relative to the vehicle seat.

2.    A child's seat as claimed in claim 1, wherein the mounting means has a first portion extending from a vehicle attachment position to a common connection with second and third portions extending from the common connection to respective spaced positions on the seat structure.

3.    A child's seat as claimed in claim 2, wherein at least one of the second and third portions is extensible in length to alter the angular orientation of the seat structure.

4.    A child's seat as claimed in claim  2 or 3, wherein the first mounting means portion can be released from the common connection between the second and third portions.

5.    A child's seat as claimed in claim  1,2,3 or 4, wherein the seat structure comprises a seat body having end portions providing the positions of engagement with the vehicle seat.

6.    A child's seat as claimed in claim  1,2,3 or 4, wherein the seat structure comprises a seat body and frame means secured thereto, the frame means providing the positions of engagement with the vehicle seat.

7.    A child's seat as claimed in claim 6, wherein the frame means comprises a generally-rectangular frame having end members providing the positions of engagement with the vehicle seat and side members between which the seat body is secured.

8.     A child's seat as claimed in claim 6 or 7, wherein the seat body is mounted for pivotation on the frame means to adjust the relative angular orientation of the frame means and the seat body.

9.     A child's seat comprising a seat body providing seat and backrest surfaces for an occupant and means for mounting the seat body on a vehicle seat, characterised by frame means for supporting the seat body on the vehicle seat, the seat body being pivotable on the frame means about a transverse axis for selective adjustment of the angular orientation of the seat body seat and backrest surfaces relative to the vehicle seat.

10.     A child's seat as claimed in claim 8 or 9, comprising means for clamping the seat body in a selected position relative to the frame means.

11.     A child's seat as claimed in claim  8, 9 or 10, wherein the mounting means is connected to the seat structure at the pivotal connection between the frame and the seat body.

12.     A child's seat according to any preceding claim, wherein the mounting means comprises strap means of selectively adjustable length extending in use from  an attachment to a vehicle anchorage,between the vehicle seat squab and backrest portions  to the seat structure.

0106689

1/4

FIG.1.

FIG.2.

FIG. 3.

112

114

128

124

129

121

118

119

143

134

110

144

130

138

132

140

136

142

128

120

124

129

FIG. 4.

119

146

112

120

114

147

FIG. 5.

FIG. 6.

FIG. 7.

FIG. 8.